# EUROPEAN PATENT SPECIFICATION

(11) **EP 2 192 644 B1**
(45) Date of publication and mention of the grant of the patent: **21.08.2013**
(21) Application number: 09305637.2
(22) Date of filing: 01.07.2009
(51) Int. Cl.: H01M 8/02

(54) **Molding material for fuel cell separator**
Formmaterial für einen Brennstoffzellenseparator
Matériau de moulage pour séparateur de pile à combustible

(30) Priority: 21.11.2008 KR 20080116445
(43) Date of publication of application: 02.06.2010
(73) Proprietor: Hankook Tire Co., Ltd, Gangnam-Gu Seoul 135-723 (KR)
(72) Inventor: Im, Nam Ik, Seo-gu, Daejeon 302-280 (KR); Ryu, Sung Hun, Yongsan-gu, Seoul (KR); Lee, Ho Sub, Yuseong-gu, Daejeon 305-330 (KR); Kim, Jeong-Heon, Yuseonggu, Daejeon 305-325 (KR); Lee, Kwang Yong, Yuseong-gu, Daejeon (KR)
(74) Representative: Intès, Didier Gérard André

(56) References cited:
- EP-A1- 1 701 400
- EP-A1- 1 826 848
- WO-A1-2008/041736
- US-A1- 2005 142 413

## Description

### BACKGROUND OF THE INVENTION

### Field of the Invention

The present invention relates to a molding material for a fuel cell separator and, more particularly, to a molding material for a fuel cell separator capable of improving both electrical conductivity and mechanical properties of the separator by adding at least one of carbon black, carbon fiber and carbon nanotube and a resin into a graphite complex prepared by mixing expandable graphite and non-expandable graphite.

### Description of the Related Art

Generally speaking, a fuel cell refers to an energy converting device that converts a chemical energy into an electrical energy through an electrochemical reaction between a fuel gas, hydrogen and an oxidant gas, such as oxygen, without a combustion process. The fuel cell is able to continuously generate electricity with supply of hydrogen and oxygen, which differentiates it from conventional batteries requiring a charge activity. A core component of the fuel cell, namely a stack, is composed of a membrane electrode assembly and a bipolar plate called a separator. The separator plays a role as a passage to supply hydrogen and oxygen to the membrane electrode assembly, to transfer electrons generated by a catalytic reaction, and to separate each unit cells in order to maintain insulation therebetween.

Conventionally, the fuel cell separator has been manufactured by mixing electrically conductive fillers such as graphite and carbon black with a resin. To enhance electrical conductivity of the fuel cell separator the amount of the electrically conductive filler is increased, but the amount of resin is decreased. If the amount of the electrically conductive filler is excessively increased, the fluidity of the material is lowered to worsen both the formability and the mechanical strength of the separator. Accordingly, it increases the fastening force in order to reduce the contact resistance acting between the adjacent separators at the time of assembling the stacks, thereby making the separator easily breakable.

Hence, studies have been made to improve the electrical conductivity of the fuel cell separator without increasing the amount of the electrically conductive filler, which have been designed to solve the problems being occurred when increasing the amount of the electrically conductive filler for the purpose of enhancing the electrical conductivity. As an exemplary trial of such studies, a fuel cell separator composed of a mixture of expandable graphite and a resin is proposed, wherein the expandable graphite is made by expanding the conventional graphite into a direction of c-axis of its crystal.

The fuel cell separator manufactured as above, however, has a drawback in that its mechanical strength is remarkably reduced while its electrical conductivity is slightly increased compared to the fuel cell separator manufactured from the conventional graphite. Accordingly, such separator becomes easily breakable when assembled to form the stack of the fuel cell.

### SUMMARY OF THE INVENTION

In view of the above-noted drawbacks and other problems inherent in the prior art, it is an object of the present invention to provide a molding material for a fuel cell separator that can simultaneously improve both electrical conductivity and mechanical properties of a fuel cell separator using a mixture of a plurality of graphite each having different characteristics in an appropriate rate.

It is anther object of the present invention to provide a fuel cell separator manufactured from a molding material which is prepared in accordance with the present invention.

It is still another object of the present invention to provide a fuel cell including a fuel cell separator manufactured in accordance with the present invention.

According to one aspect of the present invention, there is provided a molding material for a fuel cell separator including 49.9 to 95 weight % of a graphite complex which is a mixture of expandable graphite and non-expandable graphite, at a respectively weight rate of 10 to 70% and 90 to 30% of the total weight of the mixture forming the graphite complex, each having an average particle size of 20 to 200 µm; 0.1 to 10 weight % of at least one of the conductive fillers selected from the group consisting of carbon black, carbon fiber and carbon nanotube; and 4 to 50 weight % of at least one of the resins selected from a thermoplastic resin and a thermosetting resin.

The non-expandable graphite of the graphite complex is a mixture of flake graphite having an average particle size of 20 to 200 µm and spherical graphite having an average particle size of 5 to 80 µm at a respectively weight rate of 20 to 80% and 80 to 20% of the total weight of this mixture.

In accordance with another aspect of the present invention, there is provided a fuel cell separator manufactured using the molding material repaired in accordance with the present invention.

In accordance with still another aspect of the present invention, there is provided a fuel cell including the fuel cell separator manufactured according to the present invention.

### BRIEF DESCRIPTION OF THE DRAWINGS

The above and other objects, features and other advantages of the present invention will be more clearly understood from the following detailed description taken in conjunction with the accompanying drawing, in which:

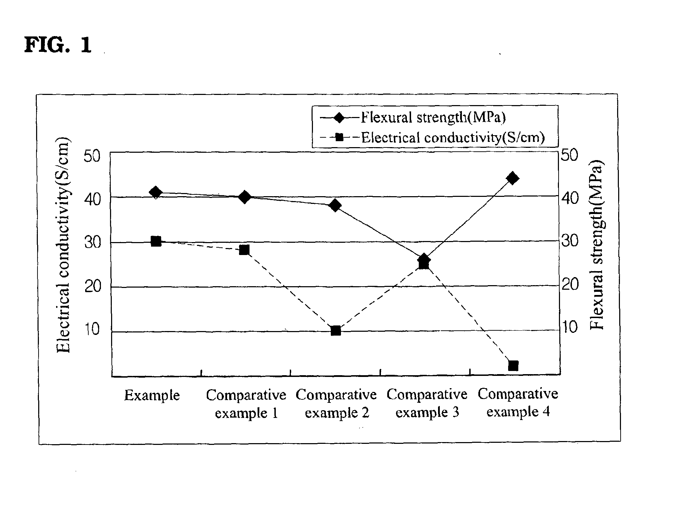

Fig. 1 is a graph illustrating the comparison of flexural strength and electrical conductivity of a fuel cell separator manufactured by an embodiment of the present invention with those of the comparative examples.

### DESCRIPTION OF THE PREFERRED EMBODIMENTS

Hereinafter, a molding material for a fuel cell separator in accordance with the present invention will be described in detail with reference to Fig. 1.

The present invention provides a molding material for a fuel cell separator including a graphite complex, at least one of the electrically conductive fillers selected from the group consisting of carbon black, carbon fiber and carbon nanotube; and at least one resin selected from a thermoplastic resin and thermosetting resin.

Here, the mixing rate of the above molding material is as following: 49.9 to 95 weight % of a graphite complex; 0.1 to 10 weight % of at least one of the electrically conductive fillers selected from the group consisting of carbon black, carbon fiber and carbon nanotube; and 4 to 50 weight % of at least one resin selected from a thermoplastic resin and thermosetting resin.

The graphite complex of the present invention is prepared by mixing expandable graphite with non-expandable graphite. Using only expandable graphite for enhancing electrical conductivity lowers the mechanical strength of the fuel cell separator, so non-expandable graphite is to be mixed with the expandable graphite to prevent degradation of the mechanical strength. Preferably, it is desirable to mix expandable graphite with non-expandable graphite at a respectively weight rate of 10 to 70% and 90 to 30% of the total weight of the mixture forming the graphite complex.

To increase the electrical conductivity, it is desirable to prepare the non-expandable graphite by mixing spherical graphite with a relatively small particle size and flake graphite with a relatively large particle size. Preferably, the mixing rate of the flake graphite with the spherical graphite might be 20 to 80% and 80 to 20% by weight of the total weight of this mixture.

It is preferred that the average particle size of the graphite complex is 20 to 200 µm for expandable graphite, 20 to 200 µm for flake graphite, and 5 to 80 µm for spherical graphite.

The reason to adopt spherical graphite having a small particle size is to prevent the fluidity of the material from being lowered as the particle size is getting smaller.

The carbon black, as electrically conductive filler, is added to compensate for the decrease of electrical conductivity as the non-expandable graphite is mixed, when compared to using expandable graphite. Basically, the carbon black is used for improving electrical conductivity and mechanical strength. Alternatively, carbon fiber or carbon nanotube may be used for such purpose instead of the carbon black depending on a design option. In accordance with the present invention, it is desirable to include 0.1 to 10 weight % of the electrically conductive filler. If the amount of the electrically conductive filler is included less than 0.1 weight %, improvement of the electrical conductivity may not be obtained. Meanwhile, if the electrically conductive filler is added more than 10 weight %, which leads to deteriorate the formability and lower the mechanical strength of the material due to a rapid reduction of the fluidity of the material.

The resin may include a thermoplastic resin, thermosetting resin, or a combination thereof. The thermoplastic resin may include one or more kinds of the resins selected from the group consisting of Polypropylene, Polyethylene, Polyvinylidene fluoride, Polymethyl methacrylate, Polycarbonate, Polyphenylene sulfide, Liquid crystalline polymer, Polyether ether ketone, Polyimide and Polyether sulfone.

The thermosetting resin may include at least one resin selected from an epoxy resin and phenol resin, or the combination thereof.

In accordance with the present invention, it is desirable to include 4 to 50 weight % of at least one resin selected from the thermoplastic resin and thermosetting resin. If the amount of the resin is added less than 4 weight %, there arises a drawback to deteriorate the formability and lower the mechanical strength of the material due to the rapid reduction of the fluidity of the material. In contrast, if the resin is included more than 50 weight %, the electrical conductivity of the material is severely deteriorated.

According to another aspect of the present invention, there is provided a fuel cell separator manufactured from a molding material prepared hereinabove. The fuel cell separator is manufactured by an injection molding or compression molding process with the molding material as above. An air passage is formed at one side of the separator, while a fuel gas passage is formed at the other side of the separator. Further, a coolant passage is formed at the center portion of the separator. By supplying a hydrogen gas and oxygen gas through the respective passages, an electrochemical reaction takes place at a catalytic layer through movement of the gases to a gas diffusion layer, thereby generating an electrical energy.

In accordance with still another aspect of the present invention, there is provided a fuel cell having a fuel cell separator manufactured from a molding material prepared hereinabove. The construction of the fuel cell according to the present invention is not specifically limited hereto. For example, the present fuel cell includes an oxidation electrode (anode electrode) where a hydrogen ion and an electron are generated from an oxidation reaction of hydrogen, a reduction electrode (cathode electrode) where water is created from an reduction reaction of air, and an electrolyte that transfers the hydrogen ion generated at the anode electrode to the cathode electrode. The construction in which the electrolyte is sandwiched between the anode and cathode electrode is often referred to as a membrane electrode assembly ("MEA"). The MEA is located between the separators to constitute a unit cell. The electricity generated by the electrochemical reaction flows through an electrically conductive material, i.e., the separator, and then the electricity will be taken off from the separator for use. The water created by the electrochemical reaction exits through a flow passage formed at the separator.

The present invention will now be described in more detail comparing the preferred embodiment of the invention with the comparative examples. It should be noted, however, that such description is presented for illustrative purpose only, and therefore, the present invention is not limited thereto.

### Example

A graphite powder is prepared by mixing flake graphite having an average particle size of 70 µm with spherical graphite having an average particle size of 20 µm at a ratio of 3 to 1 by weight %. The graphite powder prepared as above is then mixed with expandable graphite having an average particle size of 170 µm at a ratio of 3 to 1 by weight % using a dry mixer to form a graphite complex. 75 weight % of the graphite complex prepared as above, 2 weight % of a carbon black, and 23 weight % of a thermoplastic resin like polypropylene are mixed and made into a pellet shaped material using an extruder. The pellet shaped material is subjected to an injection molding through an injection molding machine to produce a separator. The flexural strength and electrical conductivity of the separator produced hereinabove are measured and shown in Table 1 and Fig. 1.

### Comparative Example 1

A graphite complex is prepared by mixing flake graphite with expandable graphite at a ratio of 3 to 1 by weight %, without adding spherical graphite. 75 weight % of the graphite complex prepared as above, 2 weight % of a carbon black, and 23 weight % of a thermoplastic resin like polypropylene are mixed and then processed using the same methods as those of Example to produce a separator. The flexural strength and electrical conductivity of the separator produced in Comparative Example 1 are measured and shown in Table 1 and Fig. 1.

### Comparative Example 2

A graphite complex is prepared by mixing flake graphite with expandable graphite at a ratio of 3 to 1 by weight %, without adding both spherical graphite and carbon black. 77 weight % of the graphite complex prepared as above and 23 weight % of a thermoplastic resin like polypropylene are mixed and then processed using the same methods as those of Example to produce a separator. The flexural strength and electrical conductivity of the separator produced in Comparative Example 2 are measured and shown in Table 1 and Fig. 1.

### Comparative Example 3

Without using flake graphite, spherical graphite and carbon black, only 77 weight % of the expandable graphite and 23 weight % of a thermoplastic resin like polypropylene are mixed and then processed using the same methods as those of Example to produce a separator. The flexural strength and electrical conductivity of the separator produced in

Comparative Example 3 are measured and shown in Table 1 and Fig. 1.

### Comparative Example 4

Without using expandable graphite, spherical graphite and carbon black, only 77 weight % of the flake graphite and 23 weight % of a thermoplastic resin like polypropylene are mixed and then processed using the same methods as those of Example to produce a separator. The flexural strength and electrical conductivity of the separator produced in Comparative Example 4 are measured and shown in Table 1 and Fig. 1.

**Table 1**

| | Mixture of Fillers | Flexural Strength (MPa) | Electrical Conductivity (S/cm) |
|---|---|---|---|
| Example | Flake Graphite, Expandable Graphite, Carbon Black and Spherical Graphite | 41 | 30 |
| Comparative Example 1 | Flake Graphite, Expandable Graphite and Carbon Black | 40 | 28 |
| Comparative Example 2 | Flake Graphite and Expandable Graphite | 38 | 10 |
| Comparative Example 3 | Expandable Graphite | 26 | 25 |
| Comparative Example 4 | Flake Graphite | 44 | 2 |

### [Evaluation method of physical properties]

### A. Flexural Strength

For a specimen having a thickness less than 1.6 mm, the flexural strength is measured using a specimen of 50.8 mm X 12. 7 mm with a span of 25.4 mm in accordance with test conditions of ASTM D 790-03.

### B. Electrical Conductivity

Electrical conductivity is measured by a four-point probe surface resistance measurement using a specimen of 50 mm X 50 mm according to regulations on measurement equipment. Thickness of the specimen is inputted as a variable into a conversion formula when converting sheet resistance and electrical conductivity, wherein a compensation coefficient will be differently converted depending on the thickness of the specimen.

As can been seen from Table 1 and Fig. 1, Comparative Example 3 manufactured using only expandable graphite shows higher electrical conductivity than that of Comparative Example 4 produced using only flake graphite, while showing an abrupt reduction of the flexural strength. Comparative Example 2, in consideration of such a drop of the flexural strength, using the graphite complex composed of flake graphite and expandable graphite shows a good increase in the flexural strength to some extent, but shows remarkable reduction of the electrical conductivity. Accordingly, it should be noted that Comparative Example 1 which adds carbon black to the graphite complex composed of flake graphite and expandable graphite considerably restores the electrical conductivity.

It should be appreciated that the inventive Example shows improvement of electrical conductivity by adopting graphite which has a relatively smaller particle size compared to flake graphite. Further, it can be appreciated that the present Example uses graphite having a spherical shape in order to restore the fluidity being lowered due to addition of the carbon black. Therefore, it should be noted that the inventive Example shows the remarkable improvement of both the mechanical strength and electrical conductivity of the fuel cell separator.

With the present invention described hereinabove, it is possible to simultaneously improve both the mechanical strength and electrical conductivity of the fuel cell separator using the molding material prepared by mixing a plurality of graphite each having different characteristics at appropriate ratios.

The embodiments set forth hereinabove have been presented for illustrative purpose only and, therefore, the present invention is not limited to these embodiments. It will be understood by those skilled in the art that various changes and modifications may be made without departing from the scope of the invention defined in the claims.

## Claims

1. A molding material for a fuel cell separator **characterized in that** it comprises;
49.9 to 95 weight % of a graphite complex;
0.1 to 10 weight % of at least one of the conductive fillers selected from the group consisting of carbon black, carbon fiber and carbon nanotube; and
4 to 50 weight % of at least one resin selected from a thermoplastic resin and a thermosetting resin,
**in that** the graphite complex is a mixture of 10 to 70 weight % of expandable graphite having an average particle size of 20 to 200 µm and 90 to 30 weight % of non-expandable graphite; and
**in that** the non-expandable graphite of the graphite complex is a mixture of 20 to 80 weight % of flake graphite and 80 to 20 weight % of spherical graphite of the weight of this mixture.

2. The molding material as recited in claim 1, **characterized in that** an average particle size of the flake graphite is 20 to 200 µm, and an average particle size of the spherical graphite is 5 to 80 µm.

## Patentansprüche

1. Formmaterial für einen Kraftstoffzellenseparator, **dadurch gekennzeichnet, daß** es umfaßt:
49,9 bis 95 Gewichts-% eines Graphitkomplexes,
0,1 bis 10 Gewichts-% von wenigstens einem der leitenden Füllstoffe, die aus der aus Carbon black, Carbonfaser und Carbonnanoröhrchen bestehenden Gruppe ausgewählt ist, und
4 bis 50 Gewichts-% von wenigstens einem Harz, das aus einem thermoplastischen Harz und einem thermohärtenden Harz ausgewählt ist,
daß der Graphitkomplex eine Mischung von 10 bis 70 Gewichts-% eines expandierbaren Graphits mit einer durchschnittlichen Partikelgröße von 20 bis 200 µm und 90 bis 30 Gewichts-% eines nicht-expandierbaren Graphits ist und
daß der nicht-expandierbare Graphit des Graphitkomplexes eine Mischung von 20 bis 80 Gewichts-% eines Schuppengraphits und 80 bis 20 Gewichts-% eines spherischen Graphits des Gewichts dieser Mischung ist.

2. Formmaterial nach Anspruch 1, **dadurch gekennzeichnet, daß** eine durchschnittliche Partikelgröße des Schuppengraphits 20 bis 200 µm beträgt und eine durchschnittliche Partikelgröße des spherischen Graphits 5 bis 80 µm beträgt.

## Revendications

1. Matériau de moulage pour un séparateur de pile à combustible **caractérisé en ce qu'**il comprend ;
de 49,9 à 95 % en masse d'un complexe de graphite ;
de 0,1 à 10 % en masse d'au moins une des charges conductrices choisies dans le groupe constitué de noir de carbone, de fibre de carbone et de nanotube de carbone ; et
de 4 à 50 % en masse d'au moins une résine choisie parmi une résine thermoplastique et une résine thermodurcissable,
**en ce que** le complexe de graphite est un mélange de 10 à 70 % en masse de graphite expansible ayant une taille moyenne de particule de 20 à 200 µm et de 90 à 30 % en masse de graphite non expansible ; et
**en ce que** le graphite non expansible du complexe de graphite est un mélange de 20 à 80 % en masse de graphite en flocons et de 80 à 20 % en masse de graphite sphérique de la masse de ce mélange.

2. Matériau de moulage selon la revendication 1, **caractérisé en ce qu'**une taille moyenne de particule du graphite en flocons est de 20 à 200 µm, et une taille moyenne de particule du graphite sphérique est de 5 à 80 µm.
